# EUROPEAN PATENT APPLICATION

(11) **EP 2 372 636 A1**
(43) Date of publication of application: **05.10.2011**
(21) Application number: 11152106.8
(22) Date of filing: 25.01.2011
(51) Int. Cl.: G06T 5/00

(54) **Shading correction device, method and program**

(30) Priority: 03.03.2010 JP 2010046662
(71) Applicant: Fujifilm Corporation, Minato-ku Tokyo (JP)
(72) Inventor: Kuwabara, Takeshi, Kanagawa (JP)
(74) Representative: Klunker . Schmitt-Nilson . Hirsch

(57) **Abstract**

A device and a method for allowing appropriate shading correction when a radiographic image of a subject is taken using a radiation detector are disclosed. A shading correction data obtaining unit (42) obtains, in advance, first shading correction data (H1) for shading attributed to a radiation source (14) and second shading correction data (H2A, H2B) for shading attributed to a FPD (22A, 22B) of a cassette (20A, 20B), and the obtained shading correction data are stored in a storage unit (38). During imaging using the cassette (20A) , for example, a detection unit (40) detects the orientation of the FPD (22A), and an image processing unit (34) rotates the first shading correction data (H1) relative to the second shading correction data (H2A, H2B) based on the detected orientation to generate final shading correction data (H0) . Then, shading correction is applied to radiographic image data obtained through imaging using the final shading correction data (H0)

## Description

### BACKGROUND OF THE INVENTION

### Field of the Invention

The present invention relates to a shading correction device and a shading correction method for correcting for shading occurring in a radiographic image when a radiographic image of a subject is taken using a radiation detector, as well as a program for causing a computer to function as the shading correction device.

### Description of the Related Art

Conventionally, various types of radiation detectors (so-called "flat panel detectors", which are hereinafter referred to as "FPDs") , which record a radiographic image of a subject formed by radiation transmitted through the subject, have been proposed and reduced into practice in the medical field, etc. An example of such a FPD is a FPD using a semiconductor, such as amorphous selenium, which generates an electric charge when exposed to radiation. As this type of FPD, those of so-called optical reading system and of TFT reading system have been proposed. Further, various types of cassettes, which include, in a case thereof, a FPD and an image memory serving as storage means for storing radiographic image data outputted from the FPD, have been proposed. Still further, among this type of cassettes, those provided with a function to send radiographic image data detected by the FPD to a processor via wireless communication have been proposed, so that the processor applies signal processing, such as image processing, to the radiographic image data.

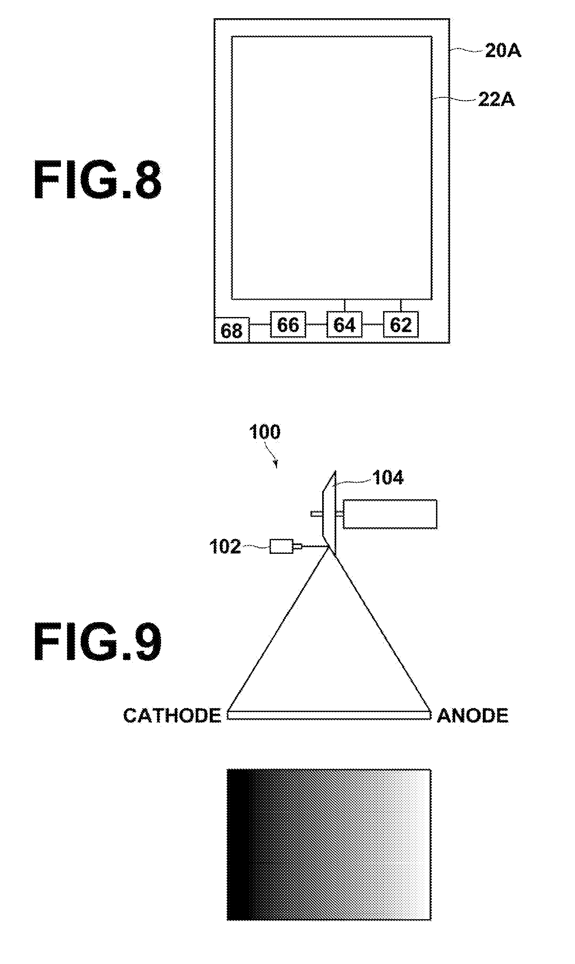

When a radiographic image is taken using the FPD, radiation emitted from a radiation source is anisotropic, and there occurs variation in irradiation of radiation occurs due to a so-called heel effect. FIG. 9 is a diagram for explaining the heel effect of an X-ray source. As shown in FIG. 9, an X-ray source 100 includes an electron beam 102 and a target 104, where electrons emitted from the electron beam 102 hit the target 104 to cause emission of an X-ray. At this time, the intensity of the X-ray is higher at the cathode side than that at the anode side because of different distances traveled by the electrons in the target 104, and there occurs variation in exposure appearing as a gradation pattern, as shown in FIG. 9, where the image density gradually changes.

Further, it is difficult to produce a FPD having uniform sensitivity throughout the pixels thereof. In addition, the variation in irradiation is also attributed to variation in a reading device for reading pixel values and variation in a housing of the cassette containing the FPD. Therefore, when a radiographic image is taken using the FPD, the obtained radiographic image data includes shading attributed to the radiation source and shading attributed to the FPD.

In order to address this problem, it has been practiced to store image data obtained by applying uniform radiation to the FPD as shading correction data, and correct radiographic image data obtained through imaging of a subject using the shading correction data. Further, a technique has been proposed, which involves detecting an incident angle of radiation onto the FPD, and modifying the shading correction data depending on the incident angle when shading correction is carried out (see Japanese Unexamined Patent Publication No. 2005-204810, which will hereinafter be referred to as Patent Document 1).

As described above, since the shading is attributed both to the radiation source and to the FPD, if a rotational positional relationship between the radiation source and the FPD is changed by 180 degrees, for example, the orientation of the shading attributed to the radiation source is also changed by 180 degrees. Therefore, in the case as described above where a reference shading correction image is generated in advance and is used for the shading correction, if imaging is carried out with the rotational positional relationship between the radiation source and the FPD being changed by 180 degrees from that when the reference correction image was generated, the shading attributed to the radiation source may be corrected in an inverse manner. In particular, since the FPD is contained in the cassette and may be used for taking radiographic images of subjects in various body postures, the rotational position of the FPD relative to the radiation source is changed in various manners during imaging using the FPD, and this may lead to inverse correction of the shading attributed to the radiation source. In the technique disclosed in the above-mentioned Patent Document 1, the shading correction data is modified depending on the incident angle of radiation, and therefore it is impossible to achieve accurate shading correction when the rotational positional relationship between the radiation source and the FPD is changed.

### SUMMARY OF THE INVENTION

In view of the above-described circumstances, the present invention is directed to providing appropriate shading correction when a radiographic image of a subject is taken using a radiation detector.

A first aspect of the shading correction device according to the invention is a shading correction device for applying shading correction to radiographic image data representing a radiographic image of a subject, the radiographic image being obtained by detecting radiation emitted from a radiation source and transmitted through the subject with a radiation detector, the device including:
storage means for storing first shading correction data for correcting for shading attributed to the radiation source and second shading correction data for correcting for shading attributed to the radiation detector;
shading correction data obtaining means for rotating the first and second shading correction data relatively to each other depending on a rotational positional relationship between the radiation source and the radiation detector, and obtaining final shading correction data from the rotated first and second shading correction data; and
correcting means for correcting for shading of the radiographic image data using the final shading correction data.

The "rotational positional relationship" herein refers to a positional relationship about rotation of the plane of the radiation detector relative to a direction extending to the cathode side and the anode side of the radiation in a state where the radiation emitted from the radiation source is applied to the radiation detector. For example, if the radiation detector is inverted upside down, the rotational positional relationship between the radiation source and the radiation detector is changed by 180 degrees.

The first aspect of the shading correction device according to the invention may further include detecting means for detecting the rotational positional relationship between the radiation source and the radiation detector,
wherein the shading correction data obtaining means may rotate the first and second shading correction data relatively to each other depending on a result of the detection by the detecting means and obtain final shading correction data from the rotated first and second shading correction data.

With respect to the rotational positional relationship between the radiation source and the FPD, in the case where the FPD is used with being attached to an imaging table, the orientation of the FPD is limited by the imaging table. Therefore, by associating each operative procedure of imaging with a corresponding orientation of the FPD, it is possible to detect to the rotational positional relationship between the radiation source and the FPD when one of the operative procedures is specified. In the case where the FPD is not attached to the imaging table, the orientation of the FPD for carrying out imaging is almost determined by an imaging menu (such as leg, knee or head). Therefore, by associating each item in the imaging menu with a corresponding rotational positional relationship between the radiation source and the FPD, it is possible to detect to the rotational positional relationship between the radiation source and the FPD when an order to carry out imaging is received.

A second aspect of the shading correction device according to the invention is a shading correction device for applying shading correction to radiographic image data representing a radiographic image of a subject, the radiographic image being obtained by detecting radiation emitted from a radiation source and transmitted through the subject with a radiation detector, the device including:
storage means for storing peaces of shading correction data corresponding to different rotational positional relationships between the radiation source and the radiation detector; and
correcting means for selecting final shading correction data from the peaces of shading correction data depending on a rotational positional relationship between the radiation source and the radiation detector, and correcting for shading of the radiographic image data using the selected shading correction data.

The second aspect of the shading correction device according to the invention may further include a detecting means for detecting the rotational positional relationship between the radiation source and the radiation detector,
wherein the correcting means may select the final shading correction data depending on a result of the detection by the detecting means.

A first aspect of the shading correction method according to the invention is a shading correction method of applying shading correction to radiographic image data representing a radiographic image of a subject, the radiographic image being obtained by detecting radiation emitted from a radiation source and transmitted through the subject with a radiation detector, the method including:
rotating first shading correction data for correcting for shading attributed to the radiation source and second shading correction data for correcting for shading attributed to the radiation detector relatively to each other depending on a rotational positional relationship between the radiation source and the radiation detector;
obtaining final shading correction data from the rotated first and second shading correction data; and
correcting for shading of the radiographic image data using the final shading correction data.

A second aspect of the shading correction method according to the invention is a shading correction method of applying shading correction to radiographic image data representing a radiographic image of a subject, the radiographic image being obtained by detecting radiation emitted from a radiation source and transmitted through the subject with a radiation detector, the method including:
selecting final shading correction data depending on a rotational positional relationship between the radiation source and the radiation detector from peaces of shading correction data corresponding to different rotational positional relationships between the radiation source and the radiation detector; and
correcting for shading of the radiographic image data using the selected shading correction data.

It should be noted that the present invention may be provided in the form of a program for causing a computer to function as the shading correction device according to any of the first and second aspects of the invention.

According to the first aspect of the shading correction device and method of the invention, first shading correction data for the radiation source and second shading correction data for the radiation detector are stored, the first and second shading correction data are rotated relatively to each other depending on the rotational positional relationship between the radiation source and the radiation detector, final shading correction data is obtained from the rotated first and second shading correction data, and radiographic image data is corrected using the final shading correction data.

According to the second aspect of the shading correction device and method of the invention, peaces of shading correction data corresponding to different rotational positional relationships between the radiation source and the radiation detector are stored, final shading correction data is selected from the peaces of shading correction data depending on the rotational positional relationship between the radiation source and the radiation detector, and radiographic image data is corrected using the final shading correction data.

In this manner, accurate shading correction can be achieved even when the rotational positional relationship between the radiation source and the radiation detector is changed in various manners during imaging.

### BRIEF DESCRIPTION OF THE DRAWINGS

FIG. 1 is a schematic diagram of a radiographic imaging system, to which a shading correction device according to a first embodiment of the present invention is applied,
FIG. 2 is a diagram for explaining orientation of a cassette,
FIG. 3 is a diagram for explaining a rotational positional relationship between first and second shading correction data,
FIG. 4 is a diagram for explaining overlap between the first and second shading correction data,
FIG. 5 is a flow chart illustrating a shading correction process carried out in a first embodiment,
FIG. 6 is a flow chart illustrating a shading correction process carried out in a second embodiment,
FIG. 7 is a schematic diagram of a radiographic imaging system, to which a shading correction device according to a third embodiment of the invention is applied,
FIG. 8 is a plan view illustrating the configuration of a cassette, and
FIG. 9 is a diagram for explaining a heel effect.

### DESCRIPTION OF THE PREFERRED EMBODIMENTS

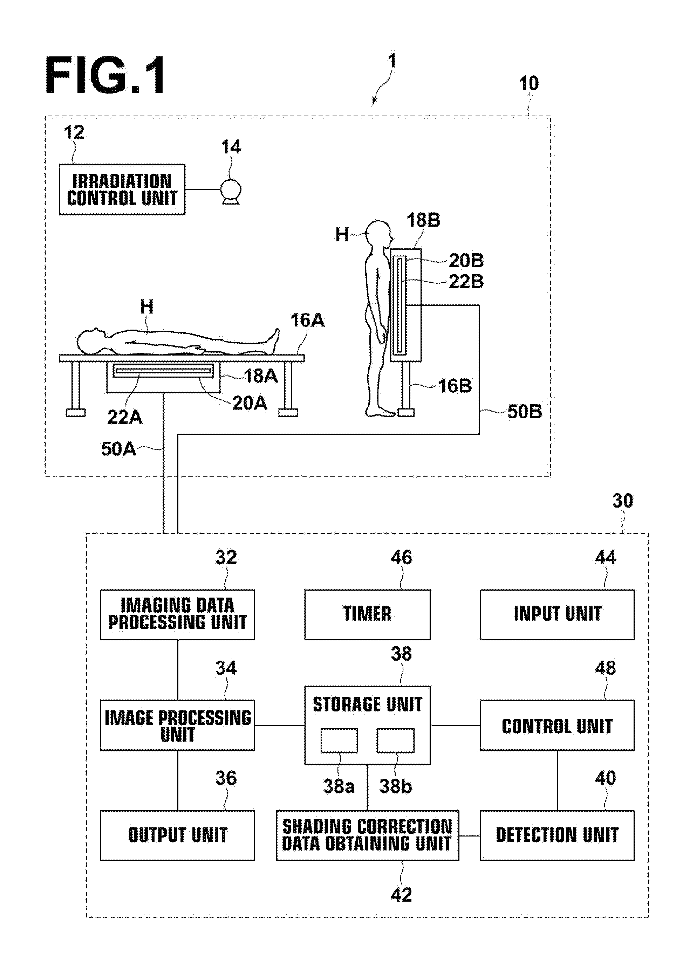

Hereinafter, embodiments of the present invention will be described with reference to the drawings. FIG. 1 is a schematic diagram of a radiographic imaging system, to which a shading correction device according to a first embodiment of the invention is applied. As shown in FIG. 1, the radiographic imaging system 1 according to first embodiment of the invention includes an imaging unit 10 and a console 30.

The imaging unit 10 includes an irradiation control unit 12, a radiation source 14, an imaging table 16A used for taking a radiographic image of a subject H in the supine position, a radiation detection unit 18A, a mount 16B used for taking a radiographic image of the subject H in the upright position, and a radiation detection unit 18B.

The irradiation control unit 12 drives the radiation source 14 to control the irradiance level such that radiation having a prescribed intensity is applied to the subject H for a prescribed time. The radiation source 14 is adapted to be able to be oriented in any direction, including the direction toward the imaging table 17A and the direction toward the mount 16B. The radiation applied from the radiation source 14 is transmitted through the subject H on the imaging table 16A or in front of the mount 16B and enters the radiation detection unit 18A or 18B.

The radiation detection units 18A and 18B include cassettes 20A and 20B, respectively, which contain FPDs 22A and 22B, respectively. The radiation transmitted through the subject H is detected by the FPD 22A or 22B and is converted into an electric signal (radiographic image data).

The cassettes 20A and 20B are connected to the console 30 via cables 50A and 50B, respectively, so that the radiographic image data, which is analog data, obtained by imaging the subject H is outputted from the cassettes 20A or 20B to the console 30 via the cables 50A or 50B. Each of the cassettes 20A and 20B includes a connector (not shown) for connection to each of the cables 50A and 50B, respectively.

The FPDs 22A and 22B may be direct-type FPDs, which directly convert the radiation into an electric charge, or indirect-type FPDs, which once convert the radiation into light, and then convert the light into an electric signal. The direct-type FPD is formed by a photoconductive film, such as amorphous selenium, a capacitor, a TFT (Thin Film Transistor) serving as a switching element, etc. When radiation, such as an x-ray, is applied to the direct-type FPD, electron-hole pairs (e-h pairs) generate from the photoconductive film. The electron-hole pairs are stored in the capacitor, and the electric charge stored in the capacitor is read out as an electric signal via the TFT.

On the other hand, the indirect-type FPD is formed by a scintillator layer made of a fluorescent material, a photodiode, a capacitor, a TFT, etc. When radiation, such as "CsI:Tl" is applied to the indirect-type FPD, the scintillator layer emits luminescence (fluorescence). The luminescence emitted by the scintillator layer is subj ected to photoelectric conversion by the photodiode and stored in the capacitor. Then, the electric charge stored in the capacitor is read out as an electric signal via the TFT.

The console 30 includes an imaging data processing unit 32, an image processing unit 34, an output unit 36, a storage unit 38, a detection unit 40, a shading correction data obtaining unit 42, an input unit 44, a timer 46 and a control unit 48.

The imaging data processing unit 32 applies data processing, such as A/D conversion, to the radiographic image data inputted from the imaging unit 10. The imaging data processing unit 32 outputs digital radiographic image data subjected to the data processing.

The image processing unit 34 applies predetermined image processing to the radiographic image data outputted from the imaging data processing unit 32 using image processing parameters stored in the storage unit 38. The image processing applied by the image processing unit 34 may be various types of image processing, such as pixel defect correction and generation of a defection map used for the pixel defect correction, image calibration (correction of the radiographic image data using calibration data) including offset correction, gain correction using a predetermined uniform-exposure image and the shading correction, as well as tone correction and density correction, data conversion, such as conversion of image data into data for display on a monitor or print output, etc. It should be noted that the present invention is characterized by the content of the shading correction, which will be described in detail later.

It should be noted that the image processing unit 34 is formed by a program (software) executed on a computer, a dedicated hardware, or a combination thereof. The image processing unit 34 outputs the radiographic image data subjected to the image processing.

The output unit 36 outputs the radiographic image data subjected to the image processing, which has been inputted from the image processing unit 34. The output unit 36 may, for example, be a monitor for displaying the radiographic image on a screen thereof, a printer for outputting the radiographic image as a print, or a storage device for storing the radiographic image data.

The storage unit 38 includes a memory 38a, which stores shading correction data used for carrying out the shading correction, calibration data for calibrating the image and image processing parameters used for various types of image processing at the image processing unit 34, and an image memory 38b for storing the radiographic image data, etc. The memory 38a and the image memory 38b may be physically different memories, or may be different memory regions of a single memory. The memories 38a and 38b may be a recording medium, such as a hard disk. Further, the memories 38a and 38b may be built in the image processing unit 34, or may be provided externally and connected to the console 30.

The detection unit 40 detects that the cassettes 20A and 20B are connected to the cables 50A and 50B and that the cassettes 20A and 20B are disconnected from the cables 50A and 50B. The detection unit 40 further detects orientation of each of the cassettes 20A and 20B when they are loaded in the radiation detection units 18A and 18B, and outputs a detection signal to the control unit 48. The detection of the fact that the cassettes 20A and 20B are connected to the cables 50A and 50B is achieved by detecting that connection between the cassette 20A and the console 30 and connection between the cassette 20B and the console 30 are established when the cassettes 20A and 20B are connected to the cables 50A and 50B. On the other hand, detection of the fact that the cassettes 20A and 20B are disconnected from the cables 50A and 50B is achieved by detecting that connection between each of the cassettes 20A and 20B and the console 30 is terminated.

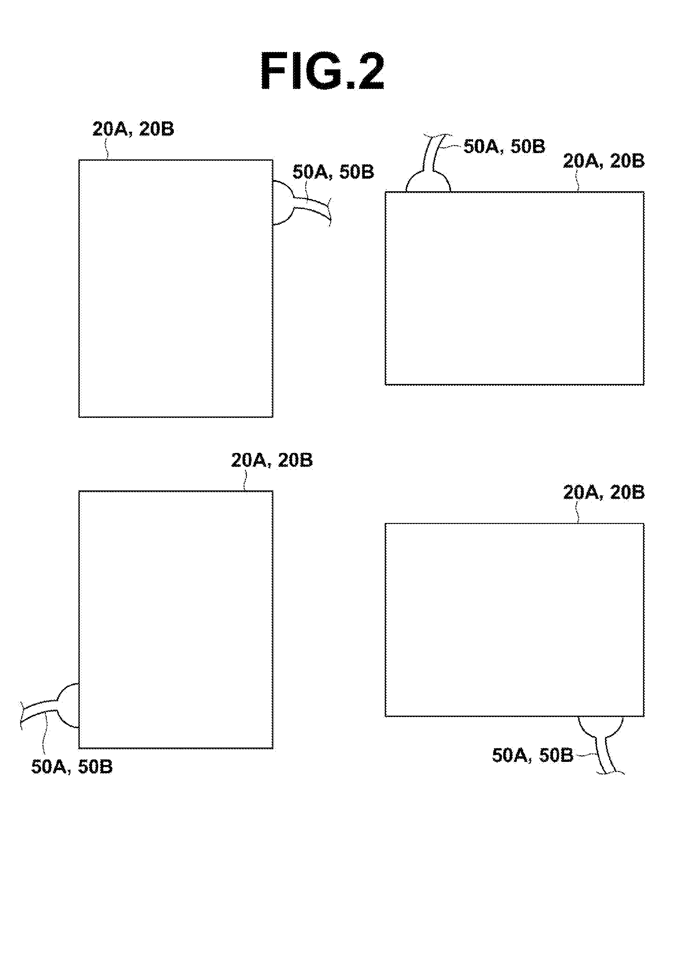

The detection of orientation of each of the cassettes 20A and 20B may be achieved by obtaining information about the orientations of the cassettes 20A and 20B, which has been inputted by the operator via the input unit 44, or may be achieved by providing sensors at the radiation detection units 18A and 18B for detecting orientations of the cassettes 20A and 20B and obtaining outputs from the sensors via the cables 50A and 50B. When the cassettes 20A and 20B are loaded in the radiation detection units 18A and 18B, there are four patterns of the orientations of the cassettes 20A and 20B, and since the cassettes 20A and 20B are connected to the cables 50A and 50B, respectively, the four orientations can be recognized by checking which positions of the cassettes 20A and 20B the cables 50A and 50B extend from, as shown in FIG. 2. Therefore, the orientations of the cassettes 20A and 20B loaded in the radiation detection units 18A and 18B can be detected by providing sensors for detecting the presence of the cables 50A and 50B at appropriate positions for detecting positions of the cables 50A and 50B when the cassettes 20A and 20B are loaded in the radiation detection units 18A and 18B.

In particular, in the case where the cassette 20B is attached to the mount 16B in the upright position, the orientation of the cassette 20B can be detected by detecting which side of the cassette 20B is on the upper side. To this end, the cassette 20B maybe provided with a gyro sensor, and an output from the gyro sensor may be fed via the cable 50B to the detection unit 40 to detect the orientation of the cassette 20B.

In response to instructions fed from the control unit 48, uniform radiation is applied to each of the cassettes 20A and 20B without the subject H, and then, the shading correction data obtaining unit 42 instructs the cassettes 20A and 20B to read out data from the FPDs 22A and 22B to obtain the shading correction data. The shading includes both shading attributed to the heel effect of the radiation source 14 and shading attributed to the FPDs 22A and 22B themselves. Therefore, the shading correction data obtaining unit 42 obtains first shading correction data H1 for shading attributed to the radiation source 14 and second shading correction data H2 for shading attributed to the FPDs 22A and 22B.

The second shading correction data is obtained for each of the FPDs 22A and 22B . In the following description, the second shading correction data for the FPD 22A is denoted by "H2A" and the second shading correction data for the FPD 22B is denoted by "H2B", respectively. Now, how the first and second shading correction data H1 and H2 are obtained is described. A process of obtaining the second shading correction data is the same for both the FPDs 22A and 22B, and therefore, only a process of obtaining the second shading correction data H2A from the FPD 22A is described.

First, the operator sets the distance between the radiation source 14 and the radiation detection unit 18A to a distance for actual imaging, and aligns the center of irradiation of the radiation from the radiation source 14 with the center of the cassette 20A loaded in the radiation detector 18A. Then, radiation from the radiation source 14 is applied to the radiation detection unit 18A to obtain first solid image data B1 with the FPD 22A in the cassette 20A. Subsequently, the distance between the radiation source 14 and the radiation detection unit 18A is increased, and second solid image data B2 is obtained with the FPD 22A in the cassette 20A by applying radiation from the radiation source 14 toward the radiation detection unit 18A in the same manner. As described above, the shading attributed to the radiation source 14 appears as a gradation pattern. The first solid image data B1 therefore includes both the shading attributed to the radiation source 14 and the shading attributed to the FPD 22A. When the distance between the radiation source 14 and the radiation detection unit 18A is increased, the gradation pattern is less likely to appear, and substantially uniform radiation is applied to the FPD 22A. The second solid image data B2 therefore includes only the shading attributed to the FPD 22A.

Thus, the shading correction data obtaining unit 42 obtains and stores the second solid image data B2 as the second shading correction data H2A in the memory 38a of the storage unit 38. On the other hand, the first solid image data B1 is divided by the second solid image data B2 for each corresponding pixel, and the resulting data includes only the shading attributed to the radiation source 14. Thus, the shading correction data obtaining unit 42 divides the first solid image data B1 by the second solid image data B2 for each corresponding pixel (i.e., B1 (x, y) /B2 (x, y) , where (x, y) represents a pixel position) to obtain and stores the first shading correction data H1 in the memory 38a of the storage unit 38.

The timer 46 counts a time, such as an elapsed time after the power supply to the system 1 is turned on. The control unit 48 controls the units of the radiographic imaging system 1 according to imaging instruction signals inputted via the input unit 44.

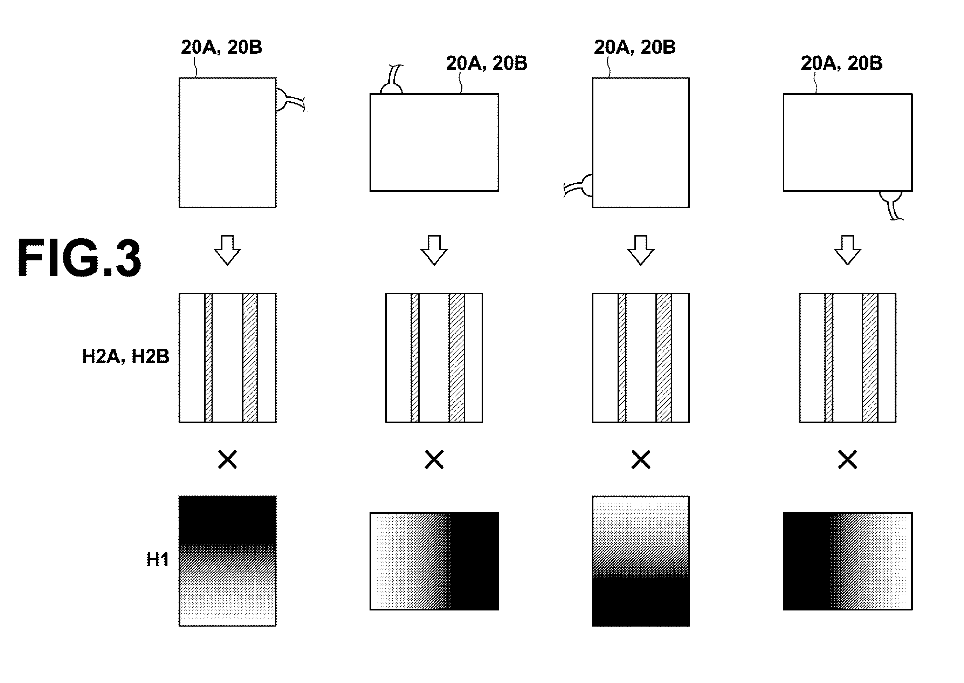

Now, a shading correction process is described. The reading of signals from the FPDs 22A and 22B is started always from a reference pixel position on each of the FPDs 22A and 22B, and thus orientation of the shading attributed to the FPDs 22A and 22B contained in the radiographic image data obtained with the FPDs 22A and 22B does not vary. On the other hand, as described above, there are four patterns of loading of the cassettes 20A and 20B in the radiation detection units 18A and 18B, and thus there are four patterns of exposure of the cassettes 20A and 20B to the radiation. Therefore, as shown in FIG. 3, the first shading correction data H1 is rotated relative to each of the second shading correction data H2A and H2B based on a rotational positional relationship between the radiation source 14 and each of the FPDs 22A and 22B, and the rotated first shading correction data H1 is multiplied by each of the second shading correction data H2A and H2B for each corresponding pixel (i.e., H1 (x, y) x H2A (x, y) ) to provide final shading correction data H0 depending on the rotational positional relationship between the radiation source 14 and each of the FPDs 22A and 22B.

It should be noted that, if the rotational angle of the first shading correction data H1 is 0 degree or 180 degrees, the x-direction and y-direction of coordinates are the same between the rotated first shading correction data H1 and the second shading correction data H2A or H2B, and the multiplication can be carried out between corresponding pixels. In contrast, if the rotational angle of the first shading correction data H1 is 90 degrees or 270 degrees, the x-direction and y-direction of coordinates are different between the rotated first shading correction data H1 and the second shading correction data H2A or H2B, and the multiplication between corresponding pixels cannot be carried out.

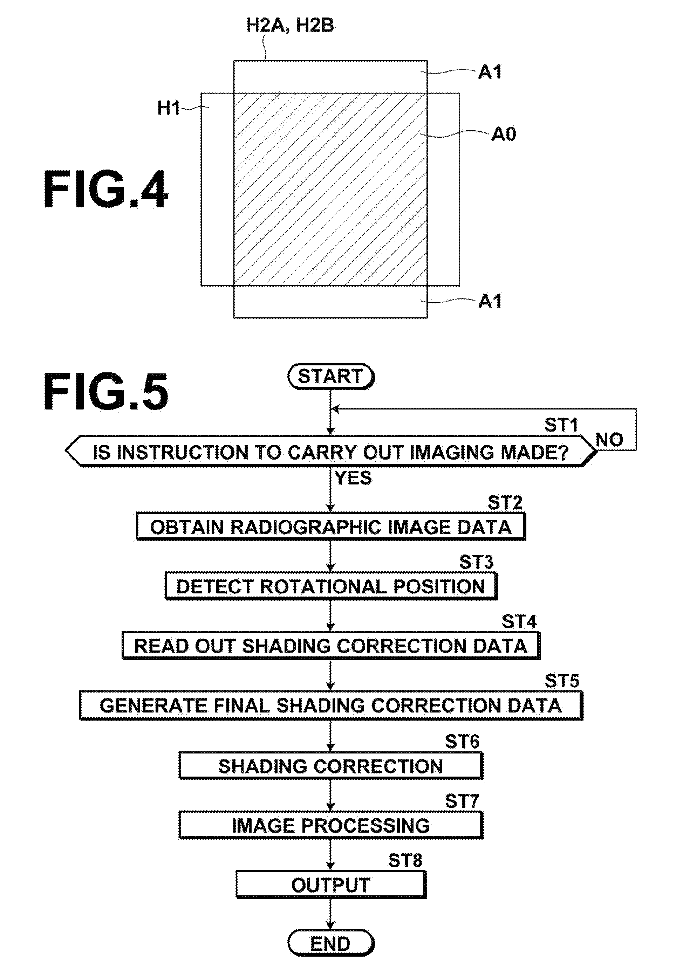

Therefore, in this embodiment, the center positions of the first shading correction data H1 and each of the second shading correction data H2A and H2B are used as references to rotate the first shading correction data H1, and then, as shown at hatched areas in FIG. 4, the multiplication between the corresponding pixels of the first shading correction data H1 and each of the second shading correction data H2A and H2B is carried out only in an area A0 where the rotated first shading correction data H1 and each of the second shading correction data H2A and H2B overlap with each other. For areas A1 other than the overlapping area A0, values of the second shading correction data H2A and H2B are used without any conversion to obtain the final shading correction data H0.

The shading correction data obtaining unit 42 rotates the first shading correction data H1 about its center position based on the detection signal fed from the detection unit 40, and carries out multiplication between the corresponding pixels of the rotated first shading correction data H1 and each of the second shading correction data H2A and H2B to obtain the final shading correction data H0. Then, the shading correction data obtaining unit 42 outputs the final shading correction data H0 to the image processing unit 34. The image processing unit 34 carries out the shading correction of the radiographic image data by dividing the radiographic image data obtained through imaging by the shading correction data H0 for each corresponding pixel.

Next, a process carried out in the first embodiment is described. The first embodiment is characterized by the content of the shading correction, and therefore description of operations other than the shading correction is omitted. For ease of explanation, it is assumed here that the subject in the spine position is imaged. During the imaging, the center of irradiation of the radiation from the radiation source 14 and the center of the cassette 20A loaded in the radiation detector 18A are aligned with each other. FIG. 5 is a flow chart illustrating a shading correction process carried out in the first embodiment. It is assumed here that the first shading correction data H1 and the second shading correction data H2A and H2B have been obtained and stored in the memory 38a of the storage unit 38 in advance. The control unit 48 monitors whether or not an instruction to carry out imaging is made (step ST1) . If an affirmative determination is made in step ST1, radiographic image data S1_{org} is obtained from the FPD 22A of the cassette 20A (step ST2).

The shading correction data obtaining unit 42 detects the rotational position of the FPD 22A based on the detection signal fed from the detection unit 40 (step ST3), and reads out the first shading correction data H1 and the second shading correction data H2A from the memory 38a of the storage unit 38 (step ST4) . The second shading correction data H2A corresponding to the FPD 22A can be read out based on the detection signal fed from the detection unit 40. Then, the shading correction data obtaining unit 42 generates the final shading correction data H0 from the first shading correction data H1 and the second shading correction data H2A (step ST5). It should be noted that the operations in steps ST3 to ST5 may be carried out in parallel with the operation in step ST2, or may be carried out prior to the operation in step ST2.

Then, the image processing unit 34 divides the radiographic image data S1_{org} by the final shading correction data H0 for each corresponding pixel to achieve the shading correction (step ST6), and obtains radiographic image data subjected to the shading correction. Further, the image processing unit 34 applies other types of image processing, such as calibration correction and density correction, to the radiographic image data subjected to the shading correction (step ST7) . Then, the output unit 36 outputs the processed radiographic image data (step ST8), and the process ends.

As described above, in this embodiment, the first shading correction data H1 for shading attributed to the radiation source 14 and the second shading correction data H2A and H2B for shading attributed to the FPDs 22A and 22B are stored, and the final shading correction data H0 is generated from the rotated first and second shading correction data depending on the rotational positional relationship between the radiation source 14 and the FPD 22A or 22B. Then, the shading correction of the radiographic image data S1_{org} is carried out using the final shading correction data H0. Thus, even when the rotational positional relationship between the radiation source 14 and each of the FPDs 22A and 22B is changed in various manners at the time of imaging, accurate shading correction can be achieved.

Next, a second embodiment of the invention is described. A radiographic imaging system to which a shading correction device according to the second embodiment is applied has the same configuration as that of the radiographic imaging system to which the shading correction device according to the first embodiment is applied, and only a process to be carried out therein is different. Therefore, detailed description of the configuration of the radiographic imaging system of the second embodiment is omitted. In the radiation imaging system according to the first embodiment, the first shading correction data H1 for shading attributed to the radiation source 14 and the second shading correction data H2A and H2B for shading attributed to the FPDs 22A and 22B are stored, and the final shading correction data H0 is generated depending on the rotational positional relationship between the radiation source 14 and each of the FPDs 22A and 22B. Whereas, in the second embodiment, pieces of final shading correction data corresponding to different rotational positional relationships between the radiation source 14 and each of the FPDs 22A and 22B are generated in advance and are stored in the storage unit 38.

As has been described above with respect to FIG. 3, there are four patterns of the rotational positional relationship between the radiation source 14 and each of the FPD 22A and 22B. In the second embodiment, the shading correction data obtaining unit 42 rotates the first shading correction data H1 from the rotational position of 0 degree to 270 degrees by 90 degrees increments. Each time, the shading correction data obtaining unit 42 multiplies the first shading correction data H1 by each of the second shading correction data H2A and H2B to generate peaces of shading correction data HF1A to HF4A and HF1B to HF4B corresponding to the different rotational positional relationship between the radiation source 14 and each of the FPDs 22A and 22B, and stores the thus generated shading correction data HF1A to HF4A and HF1B to HF4B in the memory 38a of the storage unit 38. The shading correction data HF1A to HF4A correspond to the FPD 22A, and the shading correction data HF1B to HF4B correspond to the FPD 22B.

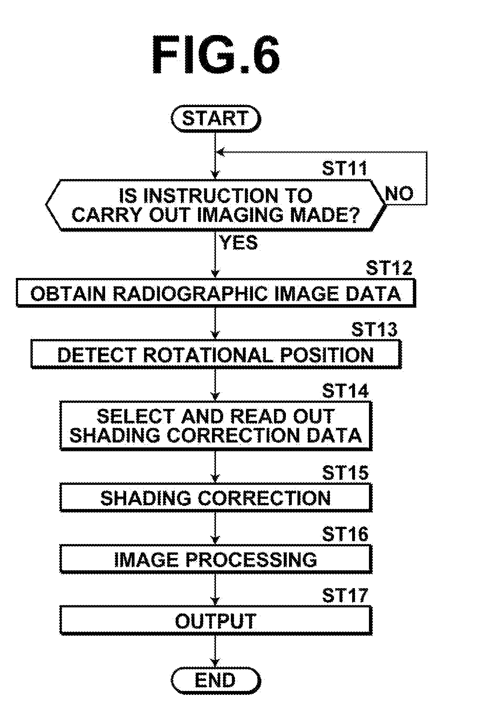

Next, a process carried out in the second embodiment is described. The second embodiment is also characterized by the content of the shading correction, and therefore description of operations other than the shading correction is omitted. For ease of explanation, it is assumed here that the subject in the spine position is imaged. FIG. 6 is a flow chart illustrating a shading correction process carried out in the second embodiment. It is assumed here that the shading correction data HF1A to HF4A and HF1B to HF4B have been obtained and stored in the memory 38a of the storage unit 38 in advance. The control unit 48 monitors whether or not an instruction to carry out imaging is made (step ST11). If an affirmative determination is made in step ST11, radiographic image data S1_{org} is obtained from the FPD 22A of the cassette 20A (step ST12).

The image processing unit 34 detects the rotational position of the FPD 22A based on the detection signal fed from the detection unit 40 (step ST13), and selects and reads out the shading correction data corresponding to the detected rotational position from the peaces of shading correction data HF1A to HF4A stored in the memory 38a of the storage unit 38 (step ST14) . The second shading correction data H2A corresponding to the FPD 22A can be read out based on the detection signal fed from the detection unit 40. The operations in steps ST13 to ST14 may be carried out in parallel with the operation in step ST12, or may be carried out prior to the operation in step ST12.

Then, the image processing unit 34 carries out the shading correction by dividing the radiographic image data S1_{org} by the read out shading correction data for each corresponding pixel (step ST15) , and obtains the radiographic image data subjected to the shading correction. Further, the image processing unit 34 applies other types of image processing, such as calibration correction and density correction, to the radiographic image data subjected to the shading correction (step ST16). Then, the output unit 36 outputs the processed radiographic image data (step ST17) , and the process ends.

In this manner, in the second embodiment, even when the rotational positional relationship between the radiation source 14 and each of the FPDs 22A and 22B is changed in various manners at the time of imaging, accurate shading correction can be achieved. Further, since it is not necessary to generate the final shading correction data H0 in the second embodiment, the shading correction can be carried out faster than in the first embodiment.

Further, although the cassettes 20A and 20B are connected to the console 30 via the cables 50A and 50B in the first and second embodiment, wireless type cassettes, which send the radiographic image data detected by the FPD to the console 30 via wireless communication, may be used. In this case, the console 30 is provided with a wireless interface for communication with the cassettes, and communicates with the wireless-type cassettes via the wireless interface to send or receive the cassette IDs and the radiographic image data.

In the case where the wireless-type cassettes are used, the console 30 recognizes the cassettes when the power supply to the system 1 is turned on and the power supply to the cassettes are turned on, and communication between the cassettes and the console 30 is established. Therefore, in the case where the wireless-type cassettes are used, the detection unit 40 may detect the connection between the cassettes and the console by detecting that the wireless communication between the cassettes and the console 30 is established.

Further, in the case where the wireless-type cassettes are used, the rotational positional relationship between the radiation source 14 and each of the cassettes 20A and 20B, or FPDs 22A and 22B, may be inputted by the operator via the input unit 44. Alternatively, the cassettes 20A and 20B may be provided with sensors for detecting orientations of the cassettes 20A and 20B, and results of detection by the sensors may be sent from the cassettes 20A and 20B to the detection unit 40 of the console 30 to detect the rotational positions of the cassettes 20A and 20B.

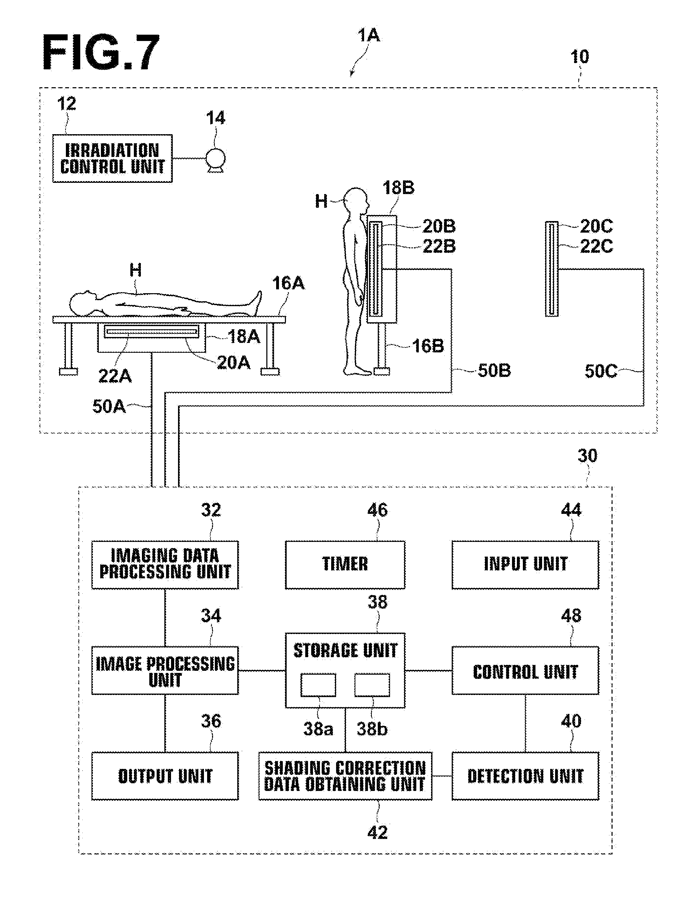

Although the radiographic imaging system using the two cassettes 20A and 20B has been described in the above-described first and second embodiments, the present invention is also applicable to a radiographic imaging system using three cassettes. Now, this type of radiographic imaging system is described as a third embodiment of the invention. FIG. 7 is a schematic diagram of a radiographic imaging system, to which a radiographic imaging device according to a third embodiment of the invention is applied. Among the elements shown in FIG. 7, those which are the same as the elements shown in FIG. 1 are denoted by the same reference numerals, and detailed description thereof is omitted. A radiographic imaging system 1A shown in FIG. 7 differs from the radiographic imaging system of first embodiment in that a cassette 20C, which allows free imaging to image the subject H in any posture, is provided. The cassette 20C for free imaging includes a FPD 22C therein and is connected to the console 30 via a cable 50C. The FPD 22C in the cassette 20C detects the radiation transmitted through the subject H and converts the detected radiation into an electric signal (radiographic image data) .

In the third embodiment, second shading correction data H2A, H2B and H2C for all the FPDs 22A to 22C of the cassettes 20A to 20C are stored in the storage unit 38. During imaging using the FPDs 22A and 22B, the shading correction is carried out in the same manner as in the above-described first embodiment. During imaging using the cassette 20C for free imaging in the third embodiment, the operator inputs the rotational positional relationship between the radiation source 14 and the FPD 22C via the input unit 44. In this manner, during imaging using the cassette 20C for free imaging, the final shading correction data H0 is generated from the first shading correction data H1 and the second shading correction data H2C, and the shading correction can be applied to a radiographic image obtained with the FPD 22C.

In the third embodiment, in place of storing the second shading correction data H2A, H2B and H2C for the FPDs 22A to 22C of the cassettes 20A to 20C, peaces of shading correction data corresponding to different rotational positional relationships between the radiation source 14 and each of the FPDs 22A, 22B and 22C may be generated and stored in the storage unit 38 in advance in the same manner as in the second embodiment.

Further, the shading correction is carried out at the image processing unit 34 of the console 30 in the above-described embodiments. However, as shown in FIG. 8, the cassette (only the cassette 20A is shown in the drawing) may be provided with, in addition to the FPD 22A: a storage unit 62 for storing the shading correction data for the FPD 22A (equivalent to the second shading correction data) and the first shading correction data H1; a data processing unit 64; a correction unit 66 for carrying out the shading correction; and a communication unit 68 for communicating with the console 30, so that the obtained signal is converted into digital data by the data processing unit 64 and the shading correction is applied to the obtained radiographic image data by the correction unit 66 in the cassette 20A, and then, the radiographic image data subjected to the shading correction is sent to the console 30 by the communication unit 68.

In this case, the rotational position of the cassette 20A relative to the radiation source 14 may be obtained by receiving the detection signal fed from the detection unit 40 by the communication unit 68 of the cassette 20A. Then, the final shading correction data H0 may be generated by the correction unit 66 in the same manner as in the above-described first embodiment to carry out the shading correction of the radiographic image data using the final shading correction data H0. Further, in place of the second shading correction data, peaces of shading correction data H0 corresponding to different rotational positional relationships between the radiation source 14 and each FPD may be generated and stored in the storage unit 62 in advance, in the same manner as in the second embodiment. Still further, in place of storing the first shading correction data H1 in the storage unit 62, the first shading correction data H1 maybe obtained from the console 30 when the shading correction is carried out.

The system 1 according to the embodiments of the invention has been described. The present invention may also be implemented in the form of a program for causing a computer to function as means corresponding to the imaging data processing unit 32, the image processing unit 34, the detection unit 40, the shading correction data obtaining unit 42 and the control unit 48 described above, and carry out the process as shown in FIG. 5 or 6. The present invention may also be implemented in the form of a computer-readable recording medium containing such a program.

## Claims

1. A shading correction device for applying shading correction to radiographic image data representing a radiographic image of a subject (H), the radiographic image being obtained by detecting radiation emitted from a radiation source (14) and transmitted through the subject (H) with a radiation detector (22A, 22B), **characterized in that** the device comprises:
storage means (38) for storing first shading correction data (H1) for correcting for shading attributed to the radiation source (14), and second shading correction data (H2A, H2B) for correcting for shading attributed to the radiation detector (22A, 22B);
shading correction data obtaining means (42) for rotating the first shading correction data (H1) and the second shading correction data (H2A, H2B) relatively to each other depending on a rotational positional relationship between the radiation source (14) and the radiation detector (22A, 22B), and obtaining final shading correction data (H0) from the rotated first shading correction data (H1) and the second shading correction data (H2A, H2B); and
correcting means (34) for correcting for shading of the radiographic image data using the final shading correction data (H0) .

2. The shading correction device as claimed in claim 1, further comprising detecting means (40) for detecting the rotational positional relationship between the radiation source (14) and the radiation detector (22A, 22B),
wherein the shading correction data obtaining means (42) rotates the first shading correction data (H1) and the second shading correction data (H2A, H2B) relatively to each other depending on a result of the detection by the detecting means (40) and obtains the final shading correction data (H0) from the rotated first shading correction data (H1) and the second shading correction data (H2A, H2B).

3. A shading correction device for applying shading correction to radiographic image data representing a radiographic image of a subject (H), the radiographic image being obtained by detecting radiation emitted from a radiation source (14) and transmitted through the subject (H) with a radiation detector (22A, 22B), **characterized in that** the device comprises:
storage means (38) for storing peaces of shading correction data corresponding to different rotational positional relationships between the radiation source (14) and the radiation detector (22A, 22B); and
correcting means (34) for selecting final shading correction data from the peaces of shading correction data depending on a rotational positional relationship between the radiation source (14) and the radiation detector (22A, 22B), and correcting for shading of the radiographic image data using the selected shading correction data.

4. The shading correction device as claimed in claim 3, further comprising detecting means (40) for detecting the rotational positional relationship between the radiation source (14) and the radiation detector (22A, 22B),
wherein the correcting means (34) selects the final shading correction data depending on a result of the detection by the detecting means (40).

5. A shading correction method of applying shading correction to radiographic image data representing a radiographic image of a subject (H), the radiographic image being obtained by detecting radiation emitted from a radiation source (14) and transmitted through the subject (H) with a radiation detector (22A, 22B), **characterized in that** the method comprises:
rotating first shading correction data (H1) for correcting for shading attributed to the radiation source (14) and second shading correction data (H2A, H2B) for correcting for shading attributed to the radiation detector (22A, 22B) relatively to each other depending on a rotational positional relationship between the radiation source (14) and the radiation detector (22A, 22B);
obtaining final shading correction data (H0) from the rotated first shading correction data (H1) and the second shading correction data (H2A, H2B); and
correcting for shading of the radiographic image data using the final shading correction data (H0).

6. A shading correction method of applying shading correction to radiographic image data representing a radiographic image of a subject (H), the radiographic image being obtained by detecting radiation emitted from a radiation source (14) and transmitted through the subject (H) with a radiation detector (22A, 22B), **characterized in that** the method comprises:
selecting final shading correction data depending on a rotational positional relationship between the radiation source (14) and the radiation detector (22A, 22B) from peaces of shading correction data corresponding to different rotational positional relationships between the radiation source (14) and the radiation detector (22A, 22B); and
correcting for shading of the radiographic image data using the selected shading correction data.

7. A program for causing a computer to function as a shading correction device for applying shading correction to radiographic image data representing a radiographic image of a subject (H), the radiographic image being obtained by detecting radiation emitted from a radiation source (14) and transmitted through the subject (H) with a radiation detector (22A, 22B), **characterized in that** the program causes the computer to function as:
storage means (38) for storing first shading correction data (H1) for correcting for shading attributed to the radiation source (14), and second shading correction data (H2A, H2B) for correcting for shading attributed to the radiation detector (22A, 22B);
shading correction data obtaining means (42) for rotating the first shading correction data (H1) and the second shading correction data (H2A, H2B) relatively to each other depending on a rotational positional relationship between the radiation source (14) and the radiation detector (22A, 22B), and obtaining final shading correction data (H0) from the rotated first shading correction data (H1) and the second shading correction data (H2A, H2B); and
correcting means (34) for correcting for shading of the radiographic image data using the final shading correction data (H0).

8. A program for causing a computer to function as a shading correction device for applying shading correction to radiographic image data representing a radiographic image of a subject (H), the radiographic image being obtained by detecting radiation emitted from a radiation source (14) and transmitted through the subject (H) with a radiation detector (22A, 22B) , **characterized in that** the program causes the computer to function as:
storage means (38) for storing peaces of shading correction data corresponding to different rotational positional relationships between the radiation source (14) and the radiation detector (22A, 22B); and
correcting means (34) for selecting final shading correction data from the peaces of shading correction data depending on a rotational positional relationship between the radiation source (14) and the radiation detector (22A, 22B), and correcting for shading of the radiographic image data using the selected shading correction data.
